# EUROPÄISCHE PATENTSCHRIFT

(11) **EP 2 353 775 B1**
(45) Veröffentlichungstag und Bekanntmachung des Hinweises auf die Patenterteilung: **24.12.2014**
(21) Anmeldenummer: 11153113.3
(22) Anmeldetag: 02.02.2011
(51) Int. Cl.: B23Q 1/62

(54) **Vorrichtung zum Verschieben eines Gegenstandes**
Device for pushing an object
Dispositif de décalage d'un objet

(30) Priorität: 03.02.2010 DE 202010001761 U
(43) Veröffentlichungstag der Anmeldung: 10.08.2011
(73) Patentinhaber: Hering, Michael, 82538 Gelting (DE); Schlagintweit, Rolf, 82335 Berg (DE)
(72) Erfinder: Hering, Michael, 82538 Gelting (DE); Schlagintweit, Rolf, 82335 Berg (DE)
(74) Vertreter: Schwabe - Sandmair - Marx

(56) Entgegenhaltungen:
- EP-A1- 1 768 131
- DE-A1- 2 447 892
- FR-A1- 2 846 313
- GB-A- 2 176 722
- GB-A- 2 314 314
- JP-A- 60 022 605
- JP-U- 59 163 222
- JP-U- 63 012 796
- US-A- 4 025 676
- US-A- 5 163 794
- US-B1- 6 430 924

## Beschreibung

Die Erfindung betrifft eine Vorrichtung zum Verschieben eines Gegenstandes mit einen Verschiebemechanismus, der auf einer im Wesentlichen glatten Unterfläche, beispielsweise einem gefliesten Boden, befestigt werden kann, mit einer mit der Unterfläche verbundenen oder verbindbaren Grundplatte und wenigstens einer relativ dazu bewegbaren Verschiebeplatte. Die Vorrichtung weist eine Antriebseinheit zum Bewegen der Verschiebeplatte auf.

Im Stand der Technik ist es bekannt, dass beispielsweise in Produktionsmaschinen Verschiebemechanismen zum Einsatz kommen, um beispielsweise Werkstücke mit einem ortsfesten Werkzeug zu bearbeiten. Die Werkstücke werden dazu auf eine Verschiebeplatte gespannt, die sich mittels einer Antriebseinheit in einem ein-, zwei- oder dreidimensionalen Raum relativ zu dem Werkzeug bewegen kann. Auch in Schaugeschäften kommen Verschiebemechanismen zum Einsatz, zum Beispiel in einer Geisterbahn, die Gegenstände oder Figuren aus einer Parkposition in eine Präsentationsposition bewegen können. In den genannten Fällen ist der Raum für den Verschiebemechanismus kein Problem, da sowohl die Produktionsmaschinen als auch die Schaugeschäfte mit den entsprechenden Räumen bereits konstruiert werden.

Die JP 60 022605 A betrifft eine gattungsgemässe Vorrichtung mit einer Grundplatte und zwei relativ zur Grundplatte und relativ zueinander bewegbaren Verschiebeplatte zum Verschieben eines Gegenstandes in die y-Richtung und die x-Richtung eines kartesischen Koordinatensystems. Eine der Grundplatten weist eine Aufnahme für einen Gegenstand auf und zwei spiegelnde Seitenflächen, die eine Einmessung der Position der Vorrichtung mittels zum Beispiel eines Laserstrahl-Messverfahrens ermöglichen.

Die GB 2 314 314 A beschreibt Vorrichtung zum Bewegen von schweren Möbeln, die direkt an einer Wand anstehen. Die Vorrichtung ist eine Kombination eines Hubwagens mit einem Möbel, wobei das Möbel hergerichtet ist, so dass der Hubwagen von einer Seite unter das Möbel gefahren werden kann, das Möbel mittels des Hubwagens angehoben und mit dem Hubwagen gemeinsam verfahren werden kann.

Es ist die Aufgabe der Erfindung eine Vorrichtung zum Verschieben eines Gegenstands bereit zu stellen, die so kompakt gebaut ist, dass sie nachträglich in eine gegebene Geometrie, beispielsweise den Sockel eines Küchenmöbels, eingebaut werden kann.

Diese Aufgabe wird erfüllt mit einer Vorrichtung zum Verschieben eines Gegenstandes nach Anspruch 1.

Die Vorrichtung zum Verschieben eines Gegenstandes oder der Verschiebemechanismus weist eine Grundplatte auf, die auf einer glatten Unterfläche befestigt ist oder befestigt werden kann. Als glatte Fläche wird im Rahmen dieser Anmeldung auch ein gefliester Boden angesehen, bei dem die einzelnen Fliesen durch Fugen getrennt sind. Auch wenn die Bodenfliesen selbst eine Struktur aufweisen, das heißt, sektional oder punktuell unterschiedliche Oberflächenhöhen aufweisen, wird der damit gebildete Boden als glatte Unterfläche angesehen. Zur Befestigung mit der Unterfläche kann die Grundplatte wenigstens eine Bohrung aufweisen, durch die ein Haltbolzen oder eine Schraube in die bevorzugt vorbereite Unterfläche eingebracht, zum Beispiel eingeschlagen oder eingeschraubt werden kann. Bevorzugt weist die Grundplatte mehrere solcher Bohrungen auf, die beispielsweise im äußeren Randbereich der Grundplatte gebildet und auf der Grundplatte so angeordnet sind, dass eine Verankerung der Grundplatte in der Unterfläche hergestellt wird, so dass die Grundplatte relativ zur Unterfläche weder linear verschoben noch verschwenkt werden kann.

Die Vorrichtung weist weiterhin eine erste Verschiebeplatte auf, die mit wenigstens einer Linearführung fest verbunden ist, so dass die erste Verschiebeplatte nicht relativ zu der Linearführung bewegt werden kann. Die Linearführung kann seitlich abstehende Arme aufweisen, die mit der Linearführung verschraubt, vernietet oder verschweißt sein können, und die ebenfalls mit der ersten Verschiebeplatte verbunden, beispielsweise verschraubt oder vernietet, werden können, und dadurch ein linear verschiebbares Auflagegestell für die erste Verschiebeplatte bilden. Die wenigstens eine Linearführung wird durch einen Stellantrieb, der auf der Grundplatte fest montiert ist, bewegt, wobei der Stellantrieb bevorzugt ein elektrischer Motor ist. Statt des elektrischen Antriebs könnte auch ein hydraulischer oder pneumatischer Antrieb vorgesehen sein, mit weiteren Zusatzelementen, wie beispielsweise einem Reservoir für das Hydraulikfluid oder die Druckluft, entsprechenden Pumpen, Ventilen und Zuleitungen. Auch ein rein manueller Antrieb ist vorstellbar, mit einer manuell lösbaren Feststellbremse.

Der Stellmotor, die Linearführung und eine Verbindung zum Bewegen der Linearführung, bilden eine erste Antriebseinheit mittels der die erste Verschiebeplatte wenigstens in eine Richtung linear verschoben werden kann. Zusätzlich kann die Antriebseinheit noch eine Steuerung für den Stellmotor mit einem Fernsteuersender aufweisen, mittels der der Stellmotor über eine Fernbedienung an- und abgeschaltet werden kann. Die Fernbedienung kann mit dem Fernsteuersender verdrahtet sein sein, bevorzugt ist aber eine drahtlose Verbindung, wie eine Funkverbindung. Dabei kann der Stellmotor so angesteuert werden, dass er die erste Verschiebplatte nach dem Start automatisch aus einer Ruheposition in eine Endposition oder Arbeitsposition fährt, et vice versa. In diesem Fall müsste die Antriebseinheit bzw. die Vorrichtung einen Sensor aufweisen, der einen anwachsenden Widerstand in Richtung auf die Endposition erkennt und bei Überschreitung eines Schwellenwertes den Antrieb abschaltet, um ein Einklemmen von Personen zwischen dem mit dem Verschiebemechanismus verschiebbaren Gegenstand und beispielsweise einer Wand und/oder eine Beschädigung der Vorrichtung zu verhindern. Bevorzugt wird der Verschiebemechanismus nur angetrieben, wenn vom Bediener ein Knopf der bevorzugt mobilen Fernbedienung mittels zum Beispiel des Daumens gerückt wird. Sobald der Daumen vom Knopf genommen wird, erhält der Motor kein Signal mehr von der Fernsteuerung und stoppt sofort. Durch abermaliges Drücken des Knopfes wird der Antrieb wieder aktiviert. Der Antrieb erlaubt bevorzugt einen weitestgehend ruckfreien Bewegungsbeginn, eine sanfte Beschleunigung auf die Verschiebegeschwindigkeit und eine langsam abnehmende Bewegungsgeschwindigkeit am Ende der Verschiebebewegung.

Die Grundplatte und die erste Verschiebeplatte weisen Bohrungen und Einfräsungen auf, in denen einzelne Elemente der Antriebseinheiten mit den Platten verbunden werden können. Außerdem weisen die beiden Platten je Ausnehmungen auf, das heißt Materialverdünnungen und/oder Materialausnehmungen, die so gebildet sind, dass Teile der Antriebseinrichtung zumindest teilweise in diese Ausnehmungen hineinreichen können. Das heißt, dass die minimale Bauhöhe der Vorrichtung mit einer ersten Verschiebeplatte durch das Bauteil mit der größten Höhe vorgegeben ist, wenn dieses Bauteil auf der Unterfläche aufsteht und die oberste Oberfläche dieses Bauteils plan ist mit der nach oben weisenden Oberfläche der ersten Verschiebeplatte.

Die Grundplatte kann an ihrer Unterseite zusätzlich eine adhäsive Schicht aufweisen, die alleine oder zusätzlich zu den oben genannten Schrauben oder Bolzen die Grundplatte mit der Unterfläche verbinden kann. Bevorzugt kann die Grundplatte mit dieser Schicht zerstörungsfrei wieder von der Unterfläche gelöst werden. Die adhäsive Schicht kann elastisch verformbar sein, so dass Bodenunebenheiten ausgeglichen werden und kein Schmutz oder Wasser zwischen die Grundplatte und die Unterfläche gelangen kann. Um ein Austrocknen oder Verschmutzen der adhäsiven Schicht beim Transport und bei der Lagerung zu verhindern, kann diese mit einer Schicht, beispielsweise einer Kunststofffolie oder einem imprägnierten Papier, abgedeckt sein. Diese Schicht wird dann erst unmittelbar vor dem Befestigen der Grundplatte auf der Unterfläche entfernt. Die adhäsive Schicht muss die Unterseite der Grundplatte nicht vollflächig bedecken.

Statt der adhäsiven Schicht kann auch eine Matte vorgesehen sein, die zwischen der Unterseite der Grundplatte und der Unterfläche platziert wird, bevorzugt mit vorbereiteten Öffnungen für die Schrauben und/oder Bolzen. Schließlich kann auch die Unterseite der Grundplatte rutschhemmend ausgebildet sein, zum Beispiel durch eine rutschhemmende Beschichtung, wie zum Beispiel einen Lack.

Die erste Verschiebeplatte kann vorbereitet sein, um einen zu verschiebenden Gegenstand zu tragen und diesen Gegenstand auf der Verschiebeplatte verschiebesicher zu halten.

Die Vorrichtung weist eine zweite Verschiebeplatte auf, die im Folgenden auch als Trägerplatte bezeichnet wird. Die Trägerplatte ist von der Unterfläche aus gesehen über der ersten Verschiebeplatte angeordnet und mit dieser verschiebbar verbunden. Wie oben bereits beschrieben, ist dazu wenigstens ein linearer Stellantrieb, der Teil einer zweiten Antriebseinheit ist, auf der ersten Verschiebeplatte montiert, und die Trägerplatte ist fest mit wenigstens einer vom Linerantrieb bewegten zweiten Linearführung verbunden. Bevorzugt wird die Trägerplatte von der zweiten Linearführung in der gleichen Ebene in eine Richtung senkrecht zur Richtung der ersten Linearführung bewegt. Die zweite Antriebseinheit ist bevorzugt auf der ersten Verschiebeplatte montiert, sie kann aber auch auf der Grundplatte montiert sein und durch eine Öffnung in der ersten Verschiebeplatte hindurchragend mit der Trägerplatte verbunden sein.

Die Trägerplatte kann wie die Grundplatte und die erste Verschiebeplatte Ausnehmungen aufweisen, in die Teile wenigstens der zweiten Antriebseinheit hineinragen. Bevorzugt weist die Trägerplatte aber wenigstens auf ihrer Oberseite, das heißt der von der ersten Verschiebeplatte wegweisenden Seite, keine solchen Ausnehmungen auf, sondern nur Bohrungen zum Befestigen von wenigstens der zweiten Linearführung.

Auf die Trägerplatte, deren Größe frei wählbar ist und die somit optimal an die Größe des zu verschiebenden Gegenstands angepasst werden kann, kann direkt der zu verschiebende Gegenstand aufgesetzt werden. Im Falle eines Küchenmöbels mit einem Sockel kann die Trägerplatte beispielsweise das Maß des von unten sichtbaren Unterbodens des Küchenmöbels haben, eventuell mit einem kleinen Untermaß. Um dennoch eine relative Beweglichkeit des Küchenmöbels zur oberen Trägerplatte zu unterbinden, kann die Trägerplatte seitlich nach außen vorgespannte Federelemente aufweisen, die beim Aufsetzen des Küchenmöbels auf die Trägerplatte gegen die Federkraft eingedrückt werden, und dadurch des Küchenmöbel auf der Trägerplatte fixieren. Der Sockel kann über handelsübliche Verbindungselemente mit der Trägerplatte verbunden sein

Der zu verschiebende Gegenstand kann alleine aufgrund seines Eigengewichtes fest auf der Trägerplatte ruhen, eventuell kann die Oberfläche der Trägerplatte einen rutschhemmenden und/oder elastisch komprimierbaren Belag aufweisen. Insbesondere leichtere Gegenstände können zusätzlich über Verbindungselemente, zum Beispiel Bolzen, formschlüssig mit der Trägerplatte oder der ersten Verschiebeplatte verbunden sein, so dass der Gegenstand ohne Werkzeugeinsatz senkrecht zur Trägerplatte oder Verschiebeplatte angehoben werden kann, eine seitliche, lineare Bewegung des Gegenstandes relativ zur Trägerplatte oder Verschiebeplatte aber weitestgehend unmöglich ist. Dazu kann die Trägerplatte oder Verschiebeplatte zum Beispiel Durchgangslöcher aufweisen, in die Bolzen eingesteckt oder durch die Bolzen durchgesteckt werden können. Die Geometrien der Bohrungen und der Bolzen können dabei so gewählt werden, dass zum Beispiel eine Verdrehung des Bolzens in der Bohrung um 90° eine Klemmung des Bolzens in der Bohrung bewirkt. Dazu könnte die Bohrung zum Beispiel leicht elliptisch ausgebildet sein und der Bolzen aus einem Material bestehen, welches sich unter Druck elastisch verformen lässt. Der Bolzen kann aber auch aus einer Bolzenhülse bestehen, die in die Bohrung eingesteckt werden kann, und einem in die Hülse einschraubbaren Spreizelement, welches beim Einschrauben die Bolzenhülse gegen die Innenwand der Bohrung drückt. Oder der Bolzen wird in ein Sackloch eingeschlagen und weitet sich dadurch aus. Statt Bolzen können auch Schrauben zum Einsatz kommen, die in unterhalb der Trägerplatte oder Verschiebeplatte befestigte, zum Beispiel angeschweißte oder angeklebte Muttern eingreifen. Es können auch Gewindebohrungen direkt in wenigstens einer der Platten vorgesehen sein, in die Schrauben, die mit ihrem Gewindeschaft durch Bohrungen im Boden des zu verschiebenden Gegenstands gesteckt werden können, eingeschraubt werden können. Auch andere Befestigungsarten, die hier nicht genannt sind, aber eine entsprechende Befestigung des Gegenstands auf der Trägerplatte oder Verschiebeplatte ermöglichen, sind vom Umfang dieser Erfindung mit umfasst, wie zum Beispiel Verbindung über Schienen und entsprechende Eingriffselemente, Schnappverbindungen oder Feder-Nut Verbindungen.

Bei dem verschiebbaren Gegenstand kann es sich um ein Küchenmöbel handeln, insbesondere um eine Kochinsel. Da die Sockelhöhe bei Einbauküchen auf eine Höhe von 13 cm genormt ist, wird dadurch für diesen Fall auch die maximale Bauhöhe des Verschiebemechanismus definiert, die maximal 13 cm betragen darf. Diese 13 cm umfassen die Bauhöhe von der Unterseite der Grundplatte, bzw. der adhäsiven Schicht, bis zur Oberseite der Trägerplatte, falls eine solche vorgesehen ist. Für andere Anwendungsfälle können davon abweichende Bauhöhen durch andere bauliche Vorgaben vorgegeben sein.

Damit der Verschiebemechanismus nicht das gesamte Gewicht des zu tragenden Gegenstandes aufnehmen muss, das mehrere 100 kg betragen kann, sind an der Unterseite der Trägerplatte Gelenkrollen angebracht, die auf der Unterfläche laufen und die Last des Gegenstands vollständig oder zumindest zu einem großen Teil aufnehmen. Diese Gelenkrollen sind bevorzugt nahe der Ecken der Trägerplatte an dieser angebracht, wobei pro Ecke wenigstens zwei zueinander versetzt angeordnete Gelenkrollen vorgesehen sein können, von denen jede einzelne mindestens ein Drittel des Gesamtgewichts des Gegenstandes tragen kann. Die Anordnung der jeweils wenigstens zwei zueinander versetzten Gelenkrollen kann nach den örtlichen Gegebenheiten bestimmt werden und soll vermeiden, dass zum Beispiel beim Überlaufen einer Bodenftiesenfuge die Trägerplatte an einer oder mehreren Ecken nicht mittels wenigstens einer Gelenkrolle auf der Unterfläche abgestützt wird. Vorteilhaft ist es weiterhin, wenn die Gelenkrollen höhenverstellbar sind, um eventuelle Unebenheiten in der Unterfläche ausgleichen zu können. Bei solch schweren Gegenständen kann es vorteilhaft sein, wenn die Antriebseinheit oder die Antriebseinheiten je wenigstens zwei stabile parallele Führungen aufweisen. Obwohl die Gelenkrollen die bevorzugten Abstützelemente für das Gewicht des Gegenstands sind, umfasst die Erfindung auch alternative Lösungen, wie zum Beispiel Magnetschwebetechnik, Luftkissentechnik oder andere geeignete Techniken, mit deren Hilfe ein Gewicht aufgenommen und versetzt werden kann. In diesen Fällen kann die oberste Trägerplatte auf festen oder einziehbaren und ausfahrbaren Stützen ruhen. Die oberste Trägerplatte wird dann mittels der Magnetschwebetechnik oder Luftkissentechnik angehoben, bis die Stützen entweder frei vom Boden sind, alternativ werden die Stützen nach Übernahme der Last durch das Trägermittel eingezogen. Nach dem Verschieben der obersten Trägerplatte bzw. des Gegenstandes, wird die oberste Trägerplatte wieder abgesetzt, so dass die Stützen wieder das Gewicht tragen, bzw. die Stützen werden wieder in eine vorgegebene Länge ausgefahren und bevorzugt in dieser Position verriegelt. Alternative könnte die Trägerplatte auch stabile Seitenwände aufweisen, die entweder den Sockel bilden oder Halterungen für einen Sockel aufweisen, und die so bemessen sind, dass das Gewicht des Gegenstands im Ruhezustand von diesen Seitenwänden getragen wird.

Bei dem Verschiebemechanismus mit einer ersten Verschiebeplatte und einer Trägerplatte kann mittels einer Steuerung auch eine diagonale Bewegung des Gegenstandes veranlasst werden. Bevorzugt ist es aber, wenn im Bewegungsablauf zunächst eine Verschiebung der ersten Verschiebeplatte in die x-Richtung erfolgt, bis die Endposition in dieser Richtung erreicht ist. Erst dann wird eine Verschiebung der Trägerplatte in die y-Richtung gestartet. Der Bewegungsablauf ist abgeschlossen, wenn auch die Endposition in der y-Richtung erreicht ist. Dabei kann es egal sein, ob der Verschiebemechanismus zunächst in die y- oder x-Richtung bewegt wird, es kann aber auch zwingend notwendig sein, dass eine Bewegung in die y-Richtung erst in der Endposition in der x-Richtung erlaubt wird. In diesem Fall ist der Antrieb für die Bewegung in die y-Richtung solange gesperrt, bis die Endposition in x-Richtung erreicht ist. Andere Bewegungsabläufe, die mit den beschriebenen Elementen möglich sind, wie zum Beispiel eine gleichzeitige Bewegung in die x- und die y-Richtung, sind ebenfalls von der Anmeldung mitumfasst.

Statt der zwei linearen Bewegungen kann wenigstens eine der Bewegungen auch eine Schwenkbewegung oder eine kombinierte Schwenk- und Linearbewegung sein. Schließlich kann der Verschiebemechanismus eine dritte Verschiebeplatte aufweisen, die entweder zwischen der ersten Verschiebeplatte und der zweiten Verschiebeplatte oder über der zweiten Verschiebeplatte angeordnet ist, und die mittels einer dritten Antriebseinheit verschwenkt werden kann.

Die dritte Verschiebeplatte kann relativ zu dem Verschiebemechanismus, der wenigstens die erste, bevorzugt die erste und die zweite Verschiebeplatte umfasst, auch zum Beispiel so verschwenkt werden, dass der Verschiebemechanismus, bzw. dessen Mechanik-, Antriebs-und Abschlusskomponenten, für Reparatur- oder Wartungszwecke in einer Serviceposition der dritten Verschiebeplatte leicht zugänglich sind. Das heißt, der Schwenkmechanismus für die dritte Verschiebeplatte ist für diesen Fall exzentrisch zu einer Mittelachse in Höhenrichtung des Verschiebemechanismus angeordnet, so dass ein Verschwenken der dritten Verschiebeplatte um die Verschwenkachse den Verschiebemechanismus zumindest teilweise offen legt. Obwohl auch diese Schwenkbewegung mittels eines Antriebs vorgenommen werden kann, ist es bevorzugt, wenn die Verschwenkung der dritten Verschiebeplatte bei dieser Ausführung rein mechanisch und von Hand erfolgt. Dabei kann der mechanische Verschwenkmechanismus dann, wenn der Gegenstand durch den Verschiebemechanismus verschoben werden kann, mittels einer Festlegungsvorrichtung, zum Beispiel einer lösbaren Bremse oder einem Bolzen, gegen ein ungewolltes Verschwenken gesichert sein. Diese Festlegungsvorrichtung kann so angebracht sein, dass sie von außen, beispielsweise durch eine abdeckbare Öffnung im Sockel, zugänglich ist. Bevorzugt ist die Festlegungsvorrichtung so ausgelegt, dass sie beim Freigeben des Verschwenkmechanismus für die dritte Verschiebeplatte gleichzeitig einen Betrieb der Antriebseinheiten der ersten und zweiten Verschiebeplatte verhindert, beispielsweise eine Stromzufuhr unterbricht. Alternativ kann auch eine dritte Antriebseinrichtung für die dritte Verschiebeplatte vorgesehen sein, mit einer Feststellungsvorrichtung, die elektrisch aktiviert und deaktiviert werden kann. Bevorzugt wird die Feststellungseinrichtung auch dann deaktiviert, wenn die Vorrichtung stromlos ist, zum Beispiel bei einem Stromausfall. Auch der Antrieb für die dritte Verschiebeplatte nimmt dann eine Leerlaufstellung ein, so dass wiederum ein Verschwenken von Hand möglich ist. Alternativ kann die Vorrichtung auch einen Akku aufweisen, der dazu dient, den Strom zur Verfügung zu stellen, der notwendig ist, um die Antriebseinheit der dritten Verschwenkplatte bei einem totalen Stromausfall in die Serviceposition zu fahren. Vorteilhaft ist der Akku auch, um die Vorrichtung trotz Stromausfalls erst in eine Position zu verfahren, in der genügend Platz ist, um die oberste Trägerplatte in die Serviceposition zu verschwenken.

Weist die Vorrichtung zur Aufnahme des Gewichts des Gegenstands Seitenwände auf und ist die oberste Trägerplatte mit den Seitenwänden so verbunden, dass die oberste Trägerplatter relativ zu den Seitenwänden verschwenkbar ist, können Gelenkrollen oder andere Trageelemente mit der verschwenkten obersten Trägerplatte außerhalb der Seitenwände verbunden werden, so dass diese dann das Gewicht des Gegenstands tragen. Diese Trageelemente können auch abklappbar an der Unterseite der obersten Trägerplatte verbunden sein, wenn es der Platz erlaubt.

Alle Gelenkrollen der Vorrichtung sind mit der dritten Verschwenkplatte verbunden, so dass die Rollen in jeder Position der dritten Verschwenkplatte das Gewicht des Gegenstands tragen. Der Sockel, der gleichzeitig eine Blende für den Verschiebemechanismus darstellt, kann bei dieser Ausführung an der zweiten Verschiebeplatte befestigt sein, so dass ein Verschwenken der dritten Verschiebeplatte möglich ist, ohne den Sockel wenigstens teilweise abmontieren zu müssen, was dann der Fall ist, wenn der Sockel an der dritten Verschiebeplatte befestigt ist.

Die dritte Verschwenkplatte kann auch zwei einkuppelbare Verschwenkmechanismen aufweisen, wobei ein Verschwenkmechanismus eine Verschiebung der Vorrichtung bzw. des Gegenstands in eine Bedienposition ermöglicht und der andere Verschwenkmechanismus ein Verschwenken der obersten Trägerplatte in die Serviceposition ermöglicht. In diesem Fall kann bei einem Stromausfall automatisch die Kupplung aktiviert werden, mit der die oberste Trägerplatte in die Serviceposition verschwenkt werden kann.

In einer weiteren Ausführung kann zusätzlich eine Hebevorrichtung bzw. ein Mechanismus vorgesehen sein, der zum Beispiel mit der Grundplatte verbunden oder verbindbar ist, das heißt auch nachträglich angebaut werden kann. Mit dieser Hebevorrichtung kann bevorzugt die erste oder die zweite Verschiebeplatte senkrecht zur Verschieberichtung angehoben werden, so dass die Arbeitshöhe an der beispielsweise Kochinsel einstellbar ist. Die Hebevorrichtung kann aus wenigstens einem Hydraulikheber bestehen, der zum Beispiel mittels einer mit dem Fuß betätigbaren Pumpvorrichtung oder einer elektrisch betriebenen Hydraulikpumpe angetrieben werden kann. Bevorzugt weißt die Hebevorrichtung aber mehr als einen Hydraulikheber auf, die fluidtechnisch so miteinander verbunden sind, dass sie nur synchron aus- und einfahren können. Statt des oder der Hydraulikheber können auch Gewindestangen und Muttern die Hebevorrichtung bilden, wobei ein oder mehrere Elektromotor/en für eine relative Drehbewegung zwischen Mutter und Zahnstange sorgt/en. Ist die Vorrichtung elektrisch betätigbar, so kann sie über Fernsteuerung angesteuert werden. Auch hier ist eine Synchronisierung der Motoren vorzusehen, um ein gleichmäßiges Anheben des Gegenstandes zu gewährleisten.

Bevorzugt wird der Gegenstand zuerst aus der Ruheposition in seine Verwendungsposition gefahren und anschließend die Arbeitshöhe des Gegenstands eingestellt. Die Höhe kann dabei stufenlos einstellbar sein oder stufenweise eingestellt werden. In der gewählten Endposition kann die Hebevorrichtung blockiert werden, um ein ungewolltes Absinken des Gegenstandes aus der eingestellten Position zu verhindern. Das Lösen aus der blockierten Position muss vom Nutzer bewusst herbeigeführt werden, zum Beispiel durch gleichzeitiges Drücken eines Deblockierungsknopfs, der am Gegenstand angebracht und mit der Hebevorrichtung verbunden ist, und Betätigen des Fußpedals oder der Fernsteuerung.

Ein lineares Verschieben des Gegenstandes aus oder in die Ruheposition soll nur möglich sein, wenn sich der Gegenstand in seiner abgesenkten Position befindet, das heißt, die Hebevorrichtung zum Anheben des Gegenstandes entlastet ist. Das heißt, dass die Antriebe zum Verschieben der ersten bzw. der ersten und zweiten Verschiebeplatten blockiert sind, solange sich der Gegenstand in einer angehobenen Position befindet. Außerdem ist es bevorzugt, dass die dritte Verschwenkplatte ebenfalls nur dann betätigt werden kann, wenn die Hebevorrichtung in der eingefahrenen, das heißt, in der entlasteten Position ist.

Um bei einem Stromausfall zu gewährleisten, dass bei Bedarf die dritte Verschwenkplatte verschwenkt werden kann, kann bei einer elektrisch betriebenen hydraulischen Hebevorrichtung für den Gegenstand eine Möglichkeit zum manuellen Öffnen der Hydraulikrückflussleitungen vorgesehen sein. Alternativ können sich die Rückflussleitungen beim Stromausfall automatisch öffnen oder eine Batterie oder ein Akku halten die Energie bereit, um ein Öffnen der Rückflussventile nach einem Stromausfall bei Bedarf zu bewirken. Auch bei einem rein elektrischen Antrieb der Hebevorrichtung kann diese bei einem Stromausfall automatisch in die Ruheposition gefahren werden oder eine Batterie oder einen Akku aufweisen, so dass der Nutzer die Hebevorrichtung kontrolliert in die Ruheposition fahren kann.

Als zusätzliches Sicherheitsmerkmal können Sensoren vorgesehen sein, die überwachen, dass die Hebevorrichtung den Gegenstand gleichförmig anhebt. Sollte eine ungleichmäßige Anhebebewegung detektiert werden, wird der Anhebevorgang automatisch gestoppt und der Gegenstand bzw. die Hebevorrichtung wieder in die abgesenkte Position gefahren. Tritt das Problem beim Absenken des Gegenstandes auf, so wird das Absenken sofort gestoppt, um eine Beschädigung der Vorrichtung insgesamt zu verhindern. Wenn ein händisches Einfahren der Hebevorrichtung möglich ist, kann der Nutzer auf diesem Weg die Hebevorrichtung einfahren.

Eine Fehlfunktion der Hebevorrichtung kann zum Beispiel durch ein akustisches und/oder optisches Signal angezeigt werden.

Bevorzugt kann die Vorrichtung aus einzelnen Modulen bestehen, die je nach Anwendungsfall zu der Vorrichtung zusammengefügt werden können. So kann die Vorrichtung zum Beispiel nur aus der Grundplatte, der ersten Verschiebeplatte und der Hebevorrichtung bestehen.

Im Folgenden wird anhand von Figuren ein Ausführungsbeispiel des Verschiebemechanismus gezeigt. Die Erfindung ist aber nicht auf das Ausführungsbeispiel beschränkt, dessen gezeigte und beschriebene Merkmale die Erfindung einzeln oder in jeder Kombination fortbilden können. Die Figuren zeigen:
- Figur 1:: Küchenmöbel mit Verschiebemechanismus
- Figur 2:: Explosionszeichnung eines Verstellmechanismus zur Verstellung in zwei Richtungen
- Figur 3: Vorrichtung in einer Ansicht von unten
- Figur 4: Seitenansicht der Vorrichtung
- Figur 5: Schnittansicht der Vorrichtung entlang der Längsachse des ersten Stellantriebs
- Figur 6: Schnittansicht der Vorrichtung entlang der Längsachse des zweiten Stellantriebs
- Figur 7: Ansicht von oben auf verschiebbares Küchenmöbel

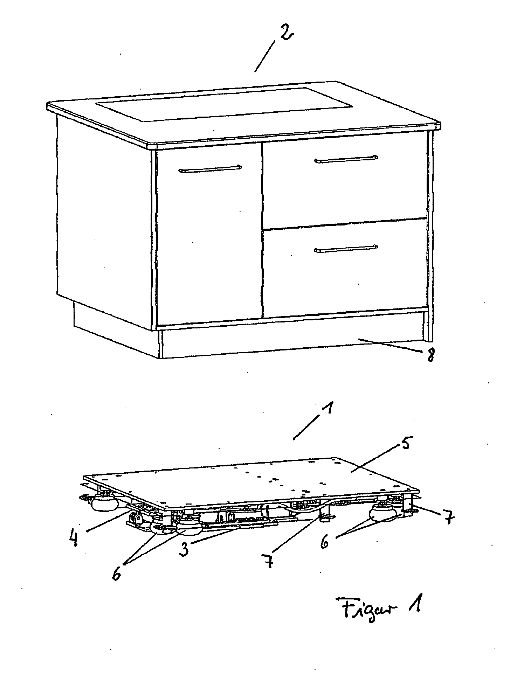

Die Figur 1 zeigt die Vorrichtung 1 zum Verschieben des Gegenstandes 2, wobei der Gegenstand 2, zum Beispiel, eine Kochinsel, noch nicht auf der Vorrichtung 1 montiert ist. An der Vorrichtung 1 sind die Grundplatte 3, die erste Verschiebeplatte 4 und die oberste Trägerplatte 5 gezeigt, sowie die Gelenkrollen 6, die jeweils paarweise in den vier Ecken mit der Trägerplatte 5 verbunden sind. Weiterhin sind an der Trägerplatte 5 Halterungen 7 für zum Beispiel einen Sockel 8 des Gegenstandes 2 zu erkennen.

Die paarweise Montage der Gelenkrollen 6 hat den Sinn, dass auch bei einem gefliesten Untergrund, wie einem Küchenboden, wenigstens eine der Gelenkrollen 6 immer in Kontakt mit dem Boden ist, insbesondere auch, wenn die andere der beiden Gelenkrollen 6 eine Fliesenfuge durchläuft. Bei sehr leichten Gegenständen kann es durchaus auch genügen pro Ecke nur eine Gelenkrolle 6 vorzusehen, bei sehr schweren Gegenständen können pro Ecke auch mehr als zwei Gelenkrollen 6 vorgesehen werden. Als Vorgabe kann gelten, dass jede einzelne der Gelenkrollen 6 so dimensioniert sein soll, dass sie in etwa ein Drittel des Gewichts des Gegenstands dauerhaft tragen kann. Bei einem Gewicht des Gegenstands von 500 kg hat es sich auch als ausreichend gezeigt, die Gelenkrollen 6 so zu dimensionieren, dass sechs Gelenkrollen 6 zusammen das Gesamtgewicht tragen können.

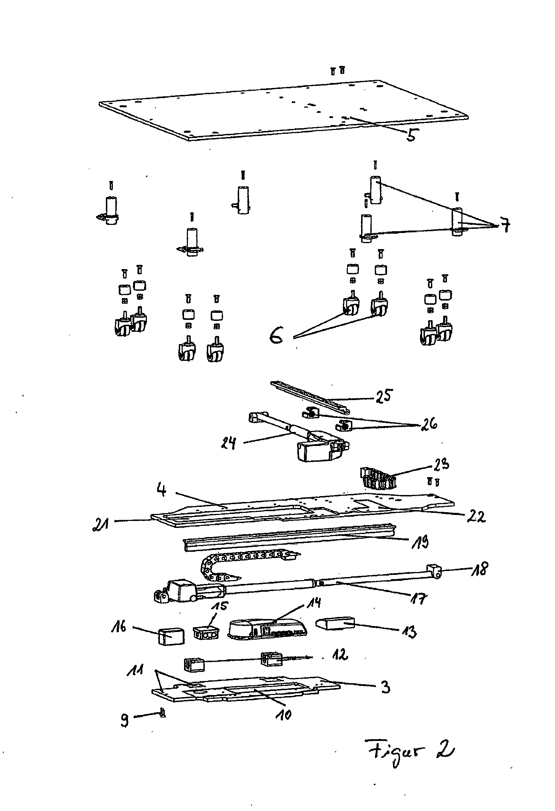

In Figur 2 ist eine beispielhafte Vorrichtung 1 in einer Explosionsdarstellung gezeigt. Von unten nach oben gesehen zeigt Figur 2: die Grundplatte 3 mit Bolzen 9, mit denen die Grundplatte 3 auf der Unterfläche fixiert werden kann. In der Grundplatte 3 ist ein Durchbruch 10 zu sehen, diverse Bohrungen und Aufnahmen 11 für die darüber gezeigten Linearlager 12. Neben den Linearlagern 12 kann auf der Grundplatte 3 oder in der Ausnehmung 10 eine Fernsteuersender 13, eine Steuereinheit 14, eine Verteilerdose 15 und ein Steckernetzteil 16 montiert, zum Beispiel auf die Unterfläche aufgeklebt oder auf der Unterfläche oder der Grundplatte 3 aufgelebt oder aufgeschraubt werden. Des Weiteren ist mit der Grundplatte 3 ein Stellantrieb 17 verbunden, mit Halteblöcken 18. Der Stellantrieb 17 bewegt eine Linearführung 19, die in den Linearlagern 12 geführt wird. Eine Schleppkette 20 schützt die Leitungen und eventuellen Zuleitungen, die mit dem Stellantrieb 17 verbunden sind.

Über der Grundplatte 3 ist mit einem Abstand die erste Verschiebeplatte 4 angeordnet, die fest mit der Linearführung 19 verbunden ist und einen Durchbruch 21, eine Ausnehmung 22 und diverse Bohrungen aufweist. In der Ausnehmung 22 wird zumindest teilweise die Schleppkette 23 aufgenommen, die Leitungen und Zuleitungen in diesem Bereich führt und schützt. Auf der Linearführung 25 ist die oberste Trägerplatte 5 montiert, and der , wie bereits zur Figur 1 beschrieben, Gelenkrollen 6 und Halterungen 7 für eine Blende angebracht werden können.

Falls notwendig können die Grundplatte 3 und die erste Verschiebeplatte 4 bzw. die erste Verschiebeplatte 4 und die oberste Trägerplatte 5 noch Abstützelemente und Führungen dafür aufweisen, mit denen die oben liegende Platte auf der darunter liegenden Platte nicht angetrieben abgestützt wird. So kann oder können ein bzw. mehrere Tonnenlager solche Abstützungen bilden, oder die oben liegende Platte kann wenigstens ein nach unten weisendes Laufrad aufweisen, das in einer Nut oder auf einer Schiene, die auf der darunter liegenden Platte gebildet ist, läuft. Nicht gezeigt ist ebenfalls eine adhäsive Schicht an der Unterseite der Grundplatte 3, die zusätzlichen Halt für die Grundplatte 3 auf der Unterfläche gibt und vorteilhafter weise gleichzeitig die Grundplatte 3 mit der Unterfläche abdichtend verbindet, so dass keine Feuchtigkeit und kein Schmutz unter die Grundplatte 3 gelangen kann.

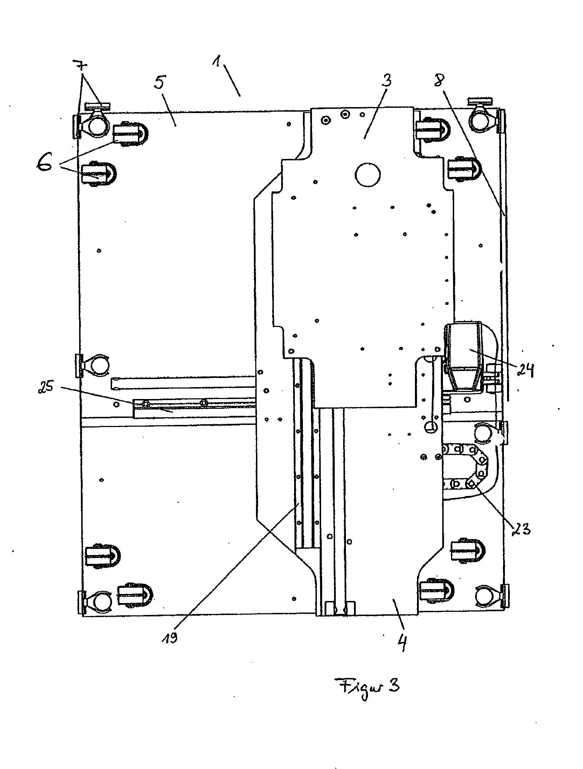

Figur 3 zeigt einen Blick auf die Vorrichtung 1 von unten mit der Grundplatte 3, der ersten Verschiebeplatte 4 und der Trägerplatte 5. An der Unterseite der Trägerplatte 5 sind in jedem Eck je ein Paar von Gelenkrollen 6 angebracht, die im Wesentlichen die Last des Gegenstandes tragen, der auf der Oberseite der obersten Trägerplatte 5 steht. Handelt es sich dabei um eine Kochinsel, so kann diese 500kg und mehr wiegen, das heißt, die Gelenkrollen 6 können entsprechend der zu tragenden Last ausgelegt werden. Aus der Figur 3 ist weiterhin die Befestigung eines Blendensockels 8 an der obersten Trägerplatte 5 mittels Halterungen 7 zu erkennen. Zu sehen ist außerdem die Linearführung 19 für die erste Antriebseinheit und die Linearführung 25 für die zweite Antriebseinheit, sowie weitere Teile der Antriebseinheiten, wie zum Beispiel die Schleppkette 23 als Schutz für Leitungen und Zuleitungen und der Stellantrieb 24.

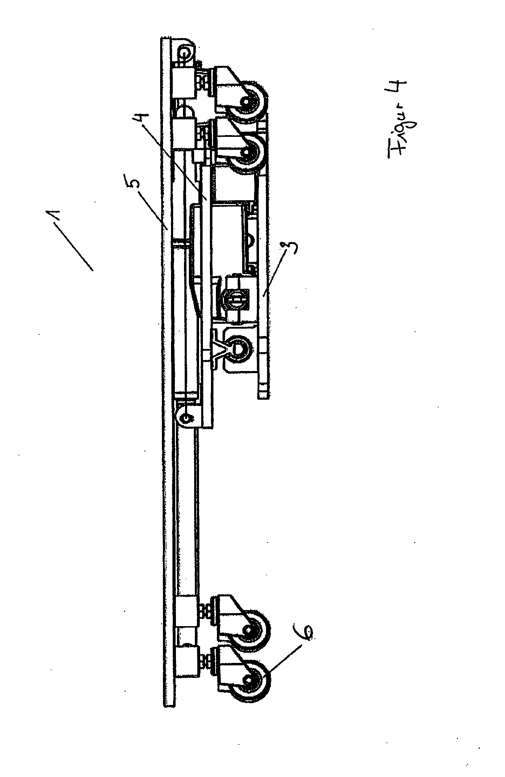

Eine Seitenansicht der Vorrichtung 1, gesehen in Richtung der Linearführung 19, zeigt die Figur 4, mit der Grundplatte 3, der ersten Verschiebeplatte 4 und der obersten Trägerplatte 5.

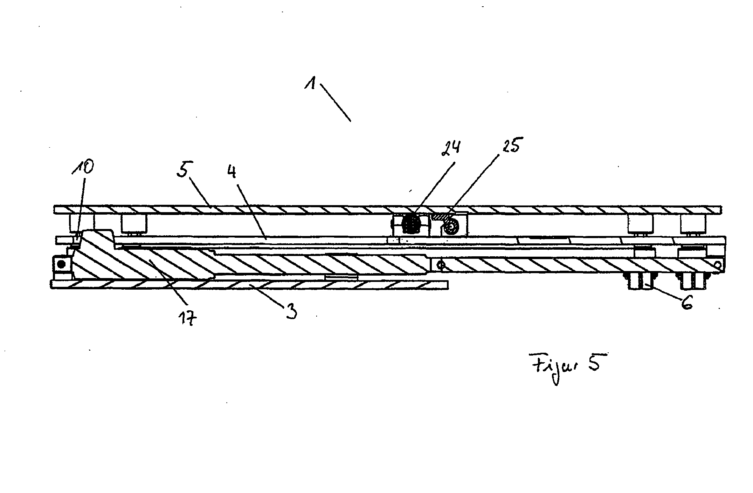

Die Figur 5 zeigt einen Schnitt durch die Vorrichtung 1 entlang der Mittelachse des Stellantriebs 17. Zu erkennen sind die Grundplatte 3, die erste Verschiebeplatte 4 und die oberste Trägerplatte 5. Zwischen der obersten Trägerplatte 5 und der ersten Verschiebeplatte 4 ist der Stellantrieb 24 und die Linearführung 25 zu erkennen. Der Stellantrieb 17 für die erste Verschiebeplatte 4 ist auf der Grundplatte 3 befestigt. In der Figur 5 ist gut zu erkennen, dass der Stellentrieb 17 sich an seinem vom Betrachter aus gesehen linken Ende nach oben durch einen Durchbruch 10 in der ersten Verschiebeplatte 4 erstreckt, womit Bauhöhe der Vorrichtung 1 eingespart wird. Der Stellantrieb 17 kann bei Bedarf und entsprechender baulichen Ausführung zusätzlich auch noch in einen Durchbruch oder eine Ausnehmung in der Grundplatte 3 hineinreichen, wodurch die Bauhöhe der Vorrichtung weiter reduziert werden kann.

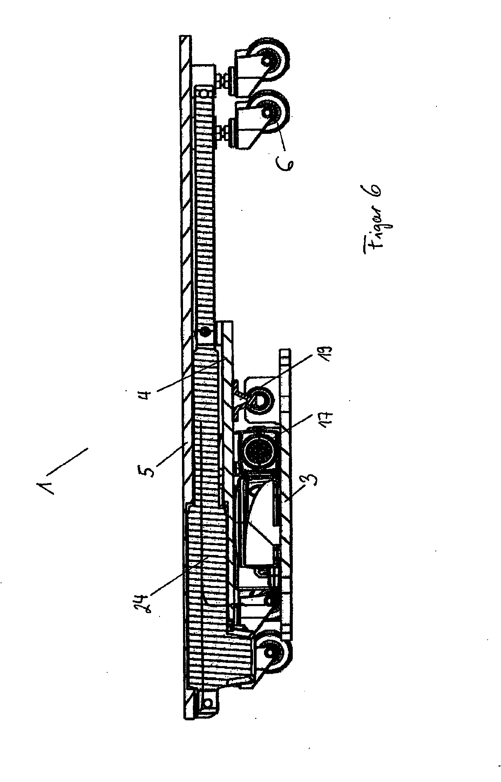

Einen Schnitt entlang der Längsachse des Stellantriebs 24 zeigt die Figur 6. Zu erkennen ist, dass der Stellantrieb 24 sich an seinem vom Betrachter aus gesehen linken Ende nach unten bis weit unter die erste Verschiebeplatte erstreckt und nach oben in eine Ausnehmung in der obersten Trägerplatte 5 ragt.

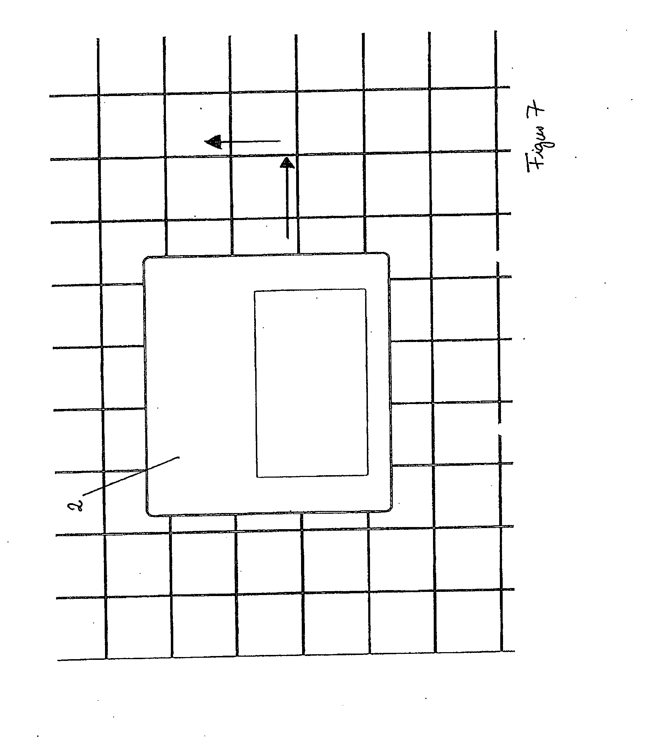

Die Figur 7 schließlich zeigt eine Ansicht eines Gegenstandes 2, zum Beispiel eines Küchenmöbels. Der Boden ist als Fliesenboden skizziert und die Pfeile geben mögliche Bewegungsrichtungen des Gegenstandes 2 mittels der nicht zu sehenden Vorrichtung an. Dabei zeigen die Pfeile die bevorzugte Bewegungsfolge der Vorrichtung, die den Gegenstand 2 zunächst linear in eine erste Richtung verschiebt, dort stoppt und dann den Gegenstand 2 in eine zweite Richtung verschiebt, bevorzugt senkrecht zur ersten Richtung. Aus der ersten und der zweiten Richtung kann durch entsprechende Ansteuerung der Antriebe auch eine Resultierende erzeugt werden, wodurch der Gegenstand schräg, zum Beispiel diagonal zu den Fliesen verschoben werden kann. Außer den linearen Bewegungen sind auch Verschwenkbewegungen und kombinierte Linear-Schwenkbewegungen mit der Vorrichtung darstellbar, vorausgesetzt sie weist die entsprechenden Antriebseinheiten auf.

### Kennzeichenliste

- 1: Vorrichtung
- 2: Gegenstand
- 3: Grundplatte
- 4: erste Verschiebeplatte
- 5: Trägerplatte
- 6: Gelenkrolle
- 7: Halterung
- 8: Sockel
- 9: Bolzen
- 10: Durchbruch
- 11: Aufnahme
- 12: Linearlager
- 13: Fernsteuersender
- 14: Steuereinheit
- 15: Verteilerdose
- 16: Netzteil
- 17: Stellantrieb
- 18: Haltebock
- 19: Linearführung
- 20: Schleppkette
- 21: Durchbruch
- 22: Ausnehmung
- 23: Schleppkette
- 24: Stellantrieb
- 25: Linearführung

## Patentansprüche

1. Vorrichtung zum Verschieben eines Gegenstandes, mit
a) einer Grundplatte (3), die auf einer glatten Unterfläche befestigt oder befestigbar ist,
b) wenigstens einer Verschiebeplatte (4), die mit der Grundplatte (3) verschiebbar verbindbar oder verbunden ist, und
c) wenigstens einer Antriebseinheit für die wenigstens eine Verschiebeplatte (4), mit der die Verschiebeplatte (4) relativ zu der Grundplatte (3) in wenigstens eine erste Richtung linear verschiebbar ist, wobei
d) die Grundplatte (3) und die Verschiebeplatte (4) je wenigstens eine Ausnehmung (22) aufweisen in die Teile der Antriebseinheit wenigstens teilweise hineinragen, und
e) die Vorrichtung (1) zusätzlich eine Trägerplatte (5) aufweist, die oberhalb der ersten Verschiebeplatte (4) angeordnet ist, und einen zweite Antriebseinheit, mit der die Trägerplatte (5) in eine zweite Richtung linear verschiebbar ist, wobei die Trägerplatte (5) hergerichtet ist, um einen verschiebbaren Gegenstand (2) zu tragen, **dadurch gekennzeichnet, dass**
f) die Last des zu verschiebenden Gegenstandes (2) im Wesentlichen von Gelenkrollen (6) aufgenommen wird, die an der Unterseite der Trägerplatte (5) befestigt sind und deren Einbauhöhe oder Baugröße im Wesentlichen der maximalen Bauhöhe der Vorrichtung (1) entspricht.

2. Vorrichtung nach Anspruch 1, **dadurch gekennzeichnet, dass** die Grundplatte (3) mit Bolzen (9) oder Schrauben mit der Unterfläche, zum Beispiel dem Boden, verbindbar ist.

3. Vorrichtung nach einem der vorgehenden Ansprüche, **dadurch gekennzeichnet, dass** die Grundplatte (3) an ihrer der Unterfläche zugewandten Seite zusätzlich eine adhäsive Schicht aufweist.

4. Vorrichtung nach einem der vorgehenden Ansprüche, **dadurch gekennzeichnet, dass** die Verschiebeplatte (4) vorbereitet ist, um einen zu verschiebenden Gegenstand (2) zu tragen.

5. Vorrichtung nach einem der beiden vorgehenden Ansprüche, **dadurch gekennzeichnet, dass** es sich beim dem verschiebbaren Gegenstand (2) um eine Kochinsel handelt.

6. Vorrichtung nach einem der vorgehenden Ansprüche, **dadurch gekennzeichnet, dass** die Antriebseinheit bzw. die Antriebseinheiten mittels einer drahtlosen Fernsteuerung bedienbar ist.

7. Vorrichtung nach einem der vorgehenden Ansprüche, **dadurch gekennzeichnet, dass** die Vorrichtung (1) eine weitere Verschiebeplatte aufweist, die zwischen der ersten Verschiebeplatte (4) und der Trägerplatte (5) oder über der Trägerplatte (5) angeordnet ist und die von Hand oder mittels einer dritten Antriebseinheit relativ zur Grundplatte (3) verschwenkbar ist.

8. Vorrichtung nach dem vorgehenden Anspruch, **dadurch gekennzeichnet, dass** die dritte Verschiebeplatte zwei einkuppelbare Verschwenkmechanismen aufweist.

9. Vorrichtung nach einem der vorgehenden Ansprüche, **dadurch gekennzeichnet, dass** die Vorrichtung (1) zusätzlich eine Hebevorrichtung aufweist, mit der der Gegenstand (2) senkrecht zu den Verschieberichtungen anhebbar und absenkbar ist.

10. Vorrichtung nach dem vorgehenden Anspruch, **dadurch gekennzeichnet, dass** die Vorrichtung wenigstens einen Sensor aufweist, wobei der Sensor oder die Sensoren ein synchrones Anheben und Absenken des Gegenstands (2) durch die Hebevorrichtung überwachen.

11. Vorrichtung nach einem der beiden vorgehenden Ansprüche, **dadurch gekennzeichnet, dass** bei angehobener Hebevorrichtung wenigstens die Antriebseinheit der ersten Verschiebeplatte (4) blockiert ist.

12. Vorrichtung nach einem der vorgehenden Ansprüche, **dadurch gekennzeichnet, dass** die Vorrichtung (1) mit einer Batterie oder einem Akku ausgerüstet ist, die bzw. der bei einem Stromausfall Energie zur Betätigung der Antriebseinheit/en bereit stellt.

## Claims

1. Apparatus for shifting an article, the apparatus comprising
a) a base plate (3) which is fixed or fixable onto a smooth underlying surface
b) at least one shifting plate (4) which is slidingly connected or connectable with the base, and
c) at least one drive unit for the at least one shifting plate (4) wherewith the shifting plate can be shifted linearly relatively to the base plate (3) in at least one first direction, whereby
d) the base plate (3) and the shifting plate (4) comprise at least one recess the parts of the drive unit at least partially extend into, and
e) the apparatus (1) further comprising a bearing plate (5) which is placed above the first shifting plate (4) and a second drive unit, wherewith the bearing plate (5) can be shifted linearly in a second direction, wherein the bearing plate (5) is designed to carry a shiftable article (2) **characterised in that**:
f) the weight of the article to be shifted (2) basically can be received by free rotating wheels (6) which are connected to an underside of the bearing plate (5) and whose height and size substantially correspond to the maximum height of the apparatus (1).

2. The apparatus according to claim 1 **characterized in that** the base plate (3) can be anchored with bolts (9) or screws to the underlying surface, for example the floor.

3. The apparatus according to one of the preceding claims **characterized in that** the base plate (3) further comprises an adhesive layer on the side of the base plate which faces the underlying surface.

4. The apparatus according to one of the preceding claims **characterized in that** the shifting plate (4) is designed to carry an article (2) to be moved.

5. The apparatus according to one of the two preceding claims **characterized in that** the article (2) to be moved is a kitchen island.

6. The apparatus according to one of the preceding claims **characterized in that** the drive unit or units can be operated by a wireless remote control.

7. The apparatus according to one of the preceding claims **characterized in that** the apparatus (1) comprises a further shifting plate placed between the first shifting plate (4) and the bearing plate (5) or above the bearing plate (5) and which can be pivoted relatively to the base plate (3) by hand or by means of a third drive unit.

8. The apparatus according to the preceding claim **characterized in that** the third shifting plate comprises two engageable pivoting mechanisms.

9. The apparatus according to one of the preceding claims **characterized in that** the apparatus (1) further comprises an elevating mechanism by means of which the article (2) can be lifted and lowered perpendicular to the shifting directions.

10. The apparatus according to the preceding claim **characterized in that** the apparatus comprises at least one sensor, whereby the sensor or the sensors monitor the synchronous lifting and lowering of the article (2) by the elevating mechanism.

11. The apparatus according to one of the two preceding claims **characterized in that** when the elevating mechanism is lifted at least the drive unit of the first shifting plate (4) is blocked.

12. The apparatus according to one of the preceding claims **characterized in that** the apparatus (1) is equipped with a battery or a storage battery for a power supply of the drive units in case of mains failure.

## Revendications

1. Dispositif pour déplacer un objet, le dispositif comprenant :
a) une plaque de base (3), qui est fixée ou peut être fixée sur une surface plane,
b) au moins une plaque coulissante (4) pouvant être ou étant déjà reliée, de façon à pouvoir coulisser, à la plaque de base (3), et
c) au moins une unité d'entraînement pour au moins une plaque coulissante (4), une unité d'entraînement au moyen de laquelle la plaque coulissante (4) peut être déplacée de manière linéaire, dans au moins une première direction, par rapport à la plaque de base (3) ;
d) la plaque de base (3) et la plaque coulissante (4) présentant au moins un évidement (22), dans lequel entrent, du moins partiellement, les parties de l'unité de l'entraînement, et
e) le dispositif (1) présentant en plus une plaque d'appui (5) disposée au-dessus de la première plaque coulissante (4) et une deuxième unité d'entraînement, à l'aide de laquelle la plaque d'appui (5) peut être déplacée de manière linéaire, dans une deuxième direction, par rapport à la plaque de base (3), la plaque d'appui (5) étant conçue pour porter un objet mobile (2) ;
f) le dispositif est **caractérisé par le fait que** la charge de l'objet mobile (2) est principalement portée par des rouleaux (6) montés de façon pivotante à la face inférieure de la plaque d'appui (5), la hauteur de montage ou bien la taille des rouleaux correspondant pour l'essentiel à la hauteur maximale du dispositif (1).

2. Dispositif selon la revendication 1, **caractérisé par le fait que** la plaque de base (3) peut être reliée, à l'aide de boulons (9) ou de vis, à la surface, comme par exemple au sol.

3. Dispositif selon l'une des revendications précédentes, **caractérisé par le fait que** la face inférieure de la plaque de base (3) opposée à la surface est en outre couverte d'une couche adhésive.

4. Dispositif selon l'une des revendications précédentes, **caractérisé par le fait que** la plaque coulissante (4) est conçue pour porter un objet mobile (2).

5. Dispositif selon l'une des deux revendications précédentes, **caractérisé par le fait que** l'objet mobile (2) est un îlot de cuisine.

6. Dispositif selon l'une des revendications précédentes, **caractérisé par le fait que** la ou les unités de l'entraînement peuvent être actionnées au moyen d'une télécommande sans fil.

7. Dispositif selon l'une des revendications précédentes, **caractérisé par le fait que** le dispositif (1) présente une deuxième plaque coulissante qui est disposée entre la première plaque coulissante (4) et la plaque d'appui (5) ou au-dessus de celle-ci (5) et que l'on peut tourner manuellement ou au moyen d'une troisième unité de l'entraînement, par rapport à la plaque de base (3).

8. Dispositif selon la revendication précédente, **caractérisé par le fait que** la troisième plaque coulissante présente deux mécanismes d'orientation embrayables et désembrayables.

9. Dispositif selon l'une des revendications précédentes, **caractérisé par le fait que** le dispositif (1) est en plus pourvu d'un dispositif de levage à l'aide duquel l'objet (2) peut être levé ou abaissé perpendiculairement aux directions de déplacement.

10. Dispositif selon la revendication précédente, **caractérisé par le fait que** le dispositif présente au moins un capteur, le ou les capteurs surveillant le levage et l'abaissement synchrone de l'objet (2) par le dispositif de levage.

11. Dispositif selon l'une des deux revendications précédentes, **caractérisé par le fait qu'**au moins l'unité de l'entraînement de la première plaque coulissante (4) est bloquée lorsque le dispositif de levage se trouve en haut.

12. Dispositif selon l'une des revendications précédentes, **caractérisé par le fait que** le dispositif (1) est pourvu d'une pile ou d'un accumulateur qui, en cas de panne de courant, fournit l'énergie nécessaire à la mise en marche de l'unité de l'entraînement.
